# EUROPÄISCHE PATENTSCHRIFT

(11) **EP 2 870 618 B1**
(45) Veröffentlichungstag und Bekanntmachung des Hinweises auf die Patenterteilung: **14.09.2016**
(21) Anmeldenummer: 13745576.2
(22) Anmeldetag: 08.07.2013
(51) Int. Cl.: H01H 85/22, H01H 85/02, H01H 37/76

(54) **SCHUTZVORRICHTUNG UND ELEKTRISCHE ANTRIEBSANORDNUNG**
PROTECTION DEVICE AND ELECTRICAL DRIVE ARRANGEMENT
DISPOSITIF DE PROTECTION ET SYSTÈME D'ENTRAÎNEMENT ÉLECTRIQUE

(30) Priorität: 06.07.2012 DE 102012211861
(43) Veröffentlichungstag der Anmeldung: 13.05.2015
(73) Patentinhaber: Brose Fahrzeugteile GmbH & Co. Kommanditgesellschaft, Würzburg, 97076 Würzburg (DE)
(72) Erfinder: HARTMANN, Uwe, 97956 Wenkheim (DE)
(74) Vertreter: Isarpatent
(86) Internationale Anmeldenummer: PCT/EP2013/002005
(87) Internationale Veröffentlichungsnummer: WO 2014/005724

(56) Entgegenhaltungen:
- WO-A1-2008/043624
- GB-A- 2 248 348
- JP-A- 2000 188 852
- US-A1- 2011 057 761

## Beschreibung

### GEBIET DER ERFINDUNG

Die vorliegende Erfindung betrifft eine Schutzvorrichtung zur Verwendung in einem elektrischen Stromkreis einer elektrischen Maschine, insbesondere eines Elektromotors, sowie eine elektrische Antriebsanordnung.

### TECHNISCHER HINTERGRUND

Die vorliegende Erfindung betrifft eine Temperaturschutzvorrichtung zur Verwendung in einem elektrischen Stromkreis eines elektrischen Gerätes, insbesondere eine Einmaltemperaturschutzvorrichtung zur Verwendung für Elektromotoren im Automobilbereich.

Die DE 30 45 540 A1 offenbart eine Schutzvorrichtung für einen elektrischen Stromkreis, insbesondere in einem Elektromotor z.B. für einen Kühlerlüfter oder eine Klimaanlage.

Die JP 2000 188852 A beschreibt eine elektrische Vorrichtung, welche eine Bürsteneinheit aufweist. Es werden ferner eine Schmelzsicherung und eine Bürstenhalterisolation beschrieben, welche unterschiedliche Schmelzpunkte aufweisen.

Für viele im Automobilbereich eingesetzte Elektromotoren wird eine Temperaturschutzvorrichtung, im Folgenden auch der Einfachheit halber kurz Temperaturschutz genannt, auf Basis von so genannten Lötdrosseln eingesetzt. Diese Lötdrosseln bestehen im Wesentlichen aus einer aus Drahtmaterial, d.h. einem oder mehreren Drahtabschnitten, bestehenden Spiralfeder, wobei das Drahtmaterial an einer Stelle, in der Regel in der Mitte der Spiralfeder bezogen auf ihre Längsausrichtung, unterbrochen ist und die Enden der Drahtabschnitte, welche in dieser Anmeldung auch allgemein als in Reihe geschaltete Kontaktmittel bezeichnet werden, unter einer Vorspannung gegeneinander mit einem Lot-Material verlötet sind. Diese Drosseln sind in einem Stromkreis eines Elektromotors angeordnet und haben einerseits die Funktion zum Entstören des Stromkreises und andererseits die Funktion zum Schutz der elektronischen Bauelemente vor ungewünschten Temperaturerhöhungen. Wenn eine bestimmte Grenztemperatur erreicht ist, schmilzt das die beiden Drahtabschnitts-Enden miteinander elektrisch verbindende Lot-Material. Aufgrund der zwischen den beiden Drahtabschnitts-Enden herrschenden mechanischen Vorspannung springen die beiden verlöteten Drahtabschnitts-Enden auf und der Stromkreis ist unterbrochen. Aufgrund der Irreversibilität der Unterbrechung spricht man auch von einem Einmaltemperaturschutz.

Herkömmlicherweise enthalten solche Lötdrosseln bleihaltiges Lotmaterial, in der Regel Sn63Pb, mit einer Schmelztemperatur von ca. 183°C. Es besteht allerdings eine seit ein paar Jahren geltende europaweite Richtlinie, nach welcher unter anderem bleihaltige Lotmaterialien für Verbraucherprodukte nicht mehr verwendet werden dürfen. Es müssen daher bleifreie Lotmaterialien mit entsprechend höheren Schmelztemperaturen verwendet werden. Die Schmelztemperatur bzw. der Schmelzbereich von bleifreiem Lotmaterial liegt typischerweise im Bereich von über 220°C.

Elektromotoren weisen herkömmlicherweise eine so genannte Haltevorrichtung auf, die auch als Bürstenhalter bezeichnet wird. Diese Haltevorrichtung dient der Aufnahme, Halterung und Führung von Stromzufuhreinrichtungen, wie etwa Kohlebürsten. Die Haltevorrichtung kann beispielsweise eine Einheit bestehend aus Spannungsregler und einem Paar von Kohlebürsten sein, welche dazu dienen, über Schleifkontakte eines Kommutators, welcher auf der Rotationsachse des Elektromotors angeordnet ist, den Elektromotor für seinen Betrieb mit Strom zu versorgen. Die Haltevorrichtung ist in der Regel aus einem Kunststoff hergestellt, wobei die Lötdrossel direkt am Bürstenhalter befestigt ist.

Die für die bleifreien Lote benötigte höhere Schmelztemperatur führt ohne Zusatzmaßnahmen bisweilen zum Versagen eines Brandschutzes, sofern das Material der Haltevorrichtung bzw. das Bürstenhaltermaterial nicht für die Anwendung auf höherem Temperaturniveau geeignet sind. Die Kohlebürsten können dann aufgrund eines Erweichens des Materials der Haltevorrichtung nicht mehr ausreichend gegen den Kommutator gedrückt werden, um einen zuverlässigen elektrischen Kontakt zu gewährleisten. Es kann daher vorkommen, dass eine Erhöhung der Temperatur zeitverzögert auf die Lötdrossel einwirkt, so dass diese nicht rechtzeitig auslöst, d.h. den Stromkreis nicht rechtzeitig unterbricht.

### ZUSAMMENFASSUNG DER ERFINDUNG

Vor diesem Hintergrund besteht die Aufgabe der vorliegenden Erfindung darin, einen verbesserten Temperaturschutz für einen elektrischen Stromkreis bereitzustellen.

Erfindungsgemäß wird diese Aufgabe durch eine Schutzvorrichtung mit den Merkmalen des Patentanspruchs 1 und/oder durch einen elektrische Antriebsanordnung mit den Merkmalen des Patentanspruchs 8 gelöst.

Demgemäß ist vorgesehen:
- Demgemäß ist ein elektrischer Stromkreis zur Versorgung einer elektrischen Maschinen mit einem elektrischen Strom, insbesondere eines Elektromotors, mit einer Haltevorrichtung, die dazu ausgebildet ist, Stromzufuhreinrichtungen zum Zuführen des elektrischen Stroms zum Elektromotor aufzunehmen und zu halten, wobei die Haltevorrichtung aus einem ersten Material mit einer ersten Schmelztemperatur T1 ausgebildet ist, mit einer Temperaturschutzvorrichtung, die dazu ausgebildet ist, den elektrischen Stromkreis vor einer Übertemperatur zu schützen, und die aus einem zweiten Material mit einer zweiten Schmelztemperatur T2 ausgebildet ist, wobei das erste Material und das zweite Material derart gewählt sind und/oder die Temperaturschutzvorrichtung derart angeordnet ist, dass der elektrische Stromkreis bei Erreichen zumindest einer der Schmelztemperaturen T1, T2 selbständig unterbrochen wird, wobei dass das Verhältnis der ersten Schmelztemperatur T1 zu der zweiten Schmelztemperatur T2 im Bereich von 1,2 bis 1,50 liegt.
- Eine elektrische Antriebsanordnung, mit einer elektrischen Maschine, mit einem elektrischen Stromkreis zur Versorgung der elektrischen Maschine und mit einer erfindungsgemäßen Schutzvorrichtung, die in Reihe in einem Strompfad des elektrischen Stromkreises angeordnet ist.
Die der vorliegenden Erfindung zugrunde liegende Idee besteht darin, die Materialien für die Haltevorrichtung und der (weitgehend oder vollständig bleifreien) Temperaturschutzvorrichtung bezüglich deren Schmelztemperaturen T1 bzw. T2 gezielt auszuwählen. Diese Materialien werden derart ausgewählt, dass ein Quotient T1/T2 der Schmelztemperatur der Haltevorrichtung bezogen auf die Temperaturschutzvorrichtung einen Wert größer als 1,2 ergibt. Kommen Lote mit Schmelzbereichen zum Einsatz, also mit nicht eutektischer Zusammensetzung, so müssen beide Grenztemperaturen des Schmelzbereiches diese Forderung erfüllen. Dadurch wird gewährleistet, dass die Funktion der Temperaturschutzvorrichtung im Fall einer Übertemperatur stets gewährleistet ist, während gleichzeitig die Funktion des Elektromotors nicht beeinträchtigt wird, solange die Schmelztemperatur der Temperaturschutzvorrichtung nicht erreicht ist.

Dies wird, wie bereits erläutert, durch die Auswahl von Materialien mit geeigneten Schmelztemperaturen bzw. Schmelztemperaturbereichen T1, T2 erreicht, wobei dennoch die Vorgabe der Verwendung von nicht-bleihaltigem Material für die Temperaturschutzvorrichtung erfüllt bleibt.

Vorteilhafte Ausgestaltungen und Weiterbildungen ergeben sich aus den Unteransprüchen sowie aus der Beschreibung unter Bezugnahme auf die Figuren.

In einer ersten Ausgestaltung umfasst das zweite Material für die Temperaturschutzvorrichtung ein bleifreies Lotmaterial. Wie bereits einleitend erwähnt, ist dies erforderlich, um insbesondere die geltenden gesetzlichen EU-Richtlinien zu erfüllen. Dies ist vor allem aus Gesundheitsaspekten von Vorteil. Zudem ist das zudem bedeutend werdende Recycling von derartigen bleifreien Materialien einfacher und aus ökologischen Gründen zu bevorzugen.

In einer weiteren Ausgestaltung weist das bleifreie Lotmaterial einen Silberanteil als Legierungsbestandteil auf. Ein Silberanteil im Lotmaterial kann die Schmelztemperatur des Lotmaterials erhöhen, was vorteilhaft bei der Auswahl einer Kombination mit Materialien der Haltevorrichtung mit entsprechender Schmelztemperatur sein kann. Es lassen sich dann einfacher Materialpaarungen finden, die den besagten Quotienten T1/T2 größer 1,2 erfüllen.
In einer weiteren bevorzugten Ausgestaltung umfasst das zweite Material für die Temperaturschutzvorrichtung eines der folgenden Materialien oder eine Kombination davon:
SnCu0,7Ni, Sn95Ag4Cu1, Sn96Ag4, Sn95,5Ag3,5 und/oder Cu. Die Schmelztemperaturen dieser Materialien bewirken den vorteilhaften Effekt, dass sie in Kombination mit den Schmelztemperaturen der weiter unten aufgeführten Materialien für die Haltevorrichtung, d.h. Polyphthalamid (PPA) und/oder Polyphenylensulfid (PPS), die geforderte erfindungsgemäße Bedingung (d.h. T1/T2 größer als 1,2) erfüllen.
Erfindungsgemäß liegt das Verhältnis der ersten Schmelztemperatur T1 zu der zweiten Schmelztemperatur T2 im Bereich von 1,20 bis 1,50. Besonders bevorzugt ist es, wenn das Verhältnis der ersten Schmelztemperatur T1 zu der zweiten Schmelztemperatur im Bereich von 1,23 und 1,40 liegt.
In einer weiteren bevorzugten Ausgestaltung ist die Temperaturschutzvorrichtung mittels Befestigungselementen oder - mitteln unmittelbar an der Haltevorrichtung angebracht. Dies hat den Vorteil, dass eine Zeitverzögerung einer Einwirkung einer Erhöhung der Temperatur auf die Temperaturschutzvorrichtung so gering wie möglich gehalten wird. Ein solcher elektrischer Stromkreis mit einer derartigen Temperaturschutzvorrichtung kann in einem Elektromotor enthalten sein.

Dies ist besonders vorteilhaft, da eine thermische Beanspruchung solcher Motoren bekanntlich relativ hoch ist.

Typischerweise ist die Haltevorrichtung zur Aufnahme und zum Führen wenigstens zweier Kohlebürsten ausgebildet, welche als Stromzufuhreinrichtungen zum Zuführen des elektrischen Stroms zum Elektromotor ausgebildet sind. Denkbar wären aber auch hinsichtlich Zahl und Art anders ausgebildete Stromzufuhreinrichtungen.

In einer weiteren Ausgestaltung ist die elektrische Maschine als ein Elektromotor für ein Kraftfahrzeug ausgebildet, welcher mit seinem stromführenden Lastpfad in Reihe zu einem Strompfad des elektrischen Stromkreises und der Temperaturschutzvorrichtung angeordnet ist. In einer besonders bevorzugten Ausgestaltung ist der Elektromotor als Kühlerlüftermotor und/oder als Klimagebläsemotor ausgebildet.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung, insbesondere der Materialien. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNGEN

Die vorliegende Erfindung wird nachfolgend anhand der in den schematischen Figuren der Zeichnungen angegebenen Ausführungsbeispiele näher erläutert. Es zeigen dabei:
- Fig. 1a, 1b: zwei unterschiedliche Ansichten einer Lötdrossel;
- Fig. 2: eine Haltevorrichtung mit einer Kohlebürste und einer an der Haltevorrichtung befestigten Lötdrossel.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren sind gleiche und funktionsgleiche Elemente, Merkmale und Komponenten verschiedener Ausführungsformen - sofern nichts Anderes ausgeführt ist - jeweils mit denselben Bezugszeichen versehen.

### BESCHREIBUNG VON AUSFÜHRUNGSBEISPIELEN

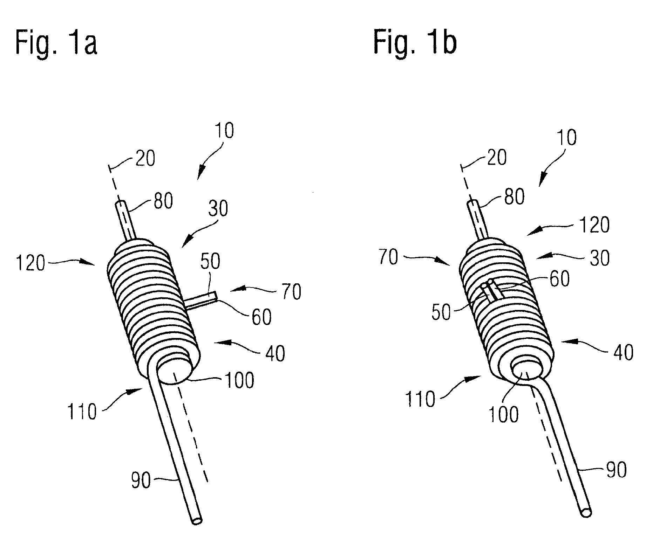

Die Figuren 1a und 1b zeigen jeweils eine perspektivische Ansicht ein und derselben Lötdrossel 10, wobei die in Figur 1b gezeigte Lötdrossel 10 für ein besseres Verständnis des Aufbaus der Lötdrossel 10 um 90° entgegen dem Uhrzeigersinn bezogen auf die in Figur 1a gezeigte Lötdrossel 10 um ihre Längsachse 20 gedreht ist.

Mit Bezug auf beide Figuren 1a und 1b weist die Lötdrossel 10 jeweils Drahtabschnitte 30, 40 auf, die jeweils spiralförmig zu Spulen geformt sind. An zusammenstoßenden Drahtenden 50, 60, die jeweils von der Lötdrossel 10 wegweisen, sind die Drahtabschnitte 30, 40 unter einer mechanischen Vorspannung zu einer Lötstelle 70 mit (hier nicht dargestelltem) Lotmaterial verlötet. Die mechanische Vorspannung sorgt dafür, dass die Drahtenden 50, 60 bei einem Schmelzen des Lotmaterials das Bestreben haben, sich voneinander in entgegengesetzte Richtungen zu bewegen, und somit, da die anderen Drahtenden 80, 90 in Reihe mit einem (hier nicht weiter dargestellten) elektrischen Stromkreis gekoppelt sind, diesen elektrischen Stromkreis unterbrechen bzw. öffnen. Dieses Öffnen sorgt dafür, dass eine Stromzufuhr zu einer die Lötdrossel 10 aufweisenden elektrischen Einrichtung, wie zum Beispiel einem Kühlerlüftermotor oder einem Klimagebläsemotor eines Kraftfahrzeuges, unterbrochen und somit ein Betrieb des Elektromotors gestoppt wird. Somit wird verhindert, dass der Elektromotor bzw. Teile davon überhitzen und einen Brand verursachen könnte.

Wiederum mit Bezug auf beide Figuren 1a und 1b weist die Lötdrossel 10 einen Ferritkern 100 auf, dessen Funktion oben bereits erläutert ist. Durch Formschluss bilden die beidseitigen Enden 110, 120 der spiralförmigen Drahtabschnitte 30, 40 feste Einspannstellen für den Ferritkern 100.

Der Vollständigkeit halber sei noch bemerkt, dass die Drahtabschnitte 30, 40 in der Regel eine äußere Isolierschicht (Kupferlackdraht) aufweisen, jedoch die Drahtenden 50, 60 zur Herstellung eines elektrischen Kontaktes zwischen ihnen abisoliert sind. Somit ist sichergestellt, dass bei einem Aufspringen der Lötstelle 70 der Strom nicht über aneinander angrenzende Drosselwicklungen weiter fließen kann.

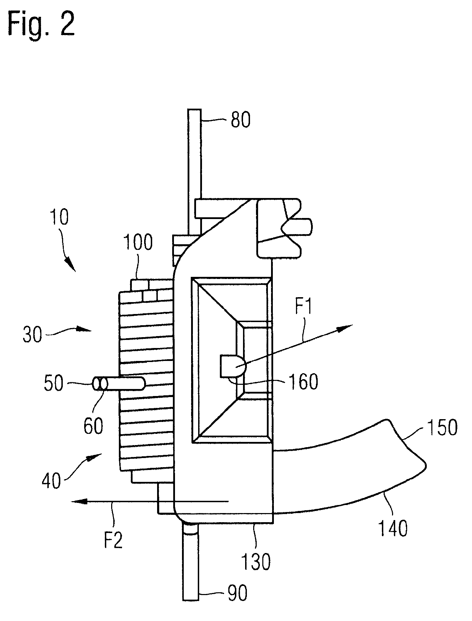

Lackdrähte aus anderem Grundmaterial als Kupfer sind nur relativ schwer kommerziell erhältlich und zudem relativ teuer. Eine Temperaturkurve des Anstiegs der Lötdrosseltemperatur wird bei Einhaltung des erfindungsgemäßen Verfahrens schnellstmöglich durchlaufen, und somit wird, auch wenn die Schmelztemperatur des Lotmaterials höher liegt, die dem Kupfer zugeführte Wärmemenge begrenzt. Dies ist notwendig, weil Kupfer, welches über längere Zeit erhöhten Temperaturen ausgesetzt wird, zu rekristallisieren beginnt, das heißt, es werden Spannungen im Material abgebaut, indem sich das Gefüge des Materials neu bildet. Die Geschwindigkeit dieses Spannungsabbaus hängt von der Temperatur, der Dauer, während welcher die Temperatur anliegt, und einem Verformungsgrad des Kupfers ab. Der Spannungsabbau hat zur Folge, dass eine Lötdrossel, auch bei Erreichen der Schmelztemperatur des Lotmaterials, nicht mehr "auslösen" bzw. öffnen kann, weil die Spannung einer Schraubenfeder, welche die Drahtabschnitte 30, 40 der Lötdrossel 10 ja darstellen, durch die Neubildung des Materialgefüges reduziert oder ganz abgebaut würde. Dies wird durch die Auswahl einer entsprechenden Materialkombination nach dem erfindungsgemäßen Verfahren verhindert, da über die gesamte Erwärmungsphase ein sicherer Kontakt einer Kohlebürste zu einem Kommutator des Elektromotors, wie weiter unten noch mit Bezug auf Figur 2 detailliert erläutert wird, sichergestellt ist, und so die Erwärmungskurve schnellstmöglich durchlaufen wird. Die auf diese Weise dem Kupfermaterial zugeführte Wärmemenge ist damit soweit begrenzt, dass in den spiralfederförmigen Drahtabschnitten 30, 40 eine ausreichende mechanische Spannung erhalten bleibt, und ein sicheres Öffnen der verlöteten Drahtenden 50, 60 sichergestellt ist.

Figur 2 zeigt - analog zu den Figuren 1a und 1b - eine Lötdrossel 10 mit Drahtabschnitten 30, 40, zusammengelöteten Drahtenden 50, 60, weiteren Drahtenden 80, 90 (für eine Kopplung mit einem elektrischen Stromkreis) sowie einen in den Drahtabschnitten 30, 40 angeordneten Ferritkern 100.

Im dargestellten Beispiel in Figur 2 ist die Lötdrossel 10 an einer Haltevorrichtung 130 befestigt, welche zur Aufnahme und Führung von Stromzufuhreinrichtungen 140 dient. Der besseren Übersichtlichkeit wegen ist in Figur 2 nur eine Stromzufuhreinrichtung 140 dargestellt. Die Stromzufuhreinrichtung 140 ist eine Kohlebürste, welche im in Figur 2 dargestellten Beispiel durch die als ein Hammerbürstenhalter ausgebildete Haltevorrichtung 130 geführt wird und in bekannter Weise auf einen Kommutator eines Elektromotors (hier nicht dargestellt) für eine Stromzufuhr drückt. Eine in der Haltevorrichtung 130 angeordnete (hier nicht sichtbare) Feder drückt dazu eine Kohlebürstekontaktfläche 150 auf den Kommutator, um bei Abrieb der Kohlebürstekontaktfläche 150 einen gleichmäßigen Kontakt mit dem Kommutator über die Zeit sicherzustellen.

Wie eingangs bereits erwähnt, umfasst das Material für die Temperaturschutzvorrichtung bzw. Lötdrossel 10 eines der folgenden Materialien oder eine Kombination davon: Sn96Ag4, SnCu0,7Ni, Sn95Ag4Cu1, Sn96Ag4, Sn95,5Ag3,5 und/oder Cu, und das Material für die Haltevorrichtung umfasst vorzugsweise einen Kunststoff aus einem der folgenden Materialien oder eine Kombination davon: Polyphthalamid (PPA) und/oder Polyphenylensulfid (PPS).

Beispielhaft seien die Schmelztemperaturen der oben erwähnten Materialien aufgeführt:

| Material | Schmelztemperatur |
|---|---|
| Sn96Ag4: | 221°C |
| SnCu0,7Ni: | 227°C |
| Sn95Ag4Cu1: | 227°C |
| PPA: | 310°C |
| PPS: | 280°C |

Ein Quotient aus einem Schmelztemperaturwert eines Lötmaterials und einem Schmelztemperaturwert eines Haltevorrichtungsmaterials liegt somit bei verschiedenen Materialkombinationen im Bereich zwischen 1,23 und 1,40, was dem Grundprinzip der vorliegenden Erfindung entspricht.

Weiterhin mit Bezug auf Figur 2, wirkt für eine Befestigung der Haltevorrichtung 130 innerhalb des Elektromotors relativ zum rotierenden Kommutator auf einen Befestigungsabschnitt 160 der Haltevorrichtung 130 eine in Richtung eines Pfeils F1 weisende Kraft F1.

Außerdem entsteht durch die Federbelastung der Kohlebürste 140 auf den Kommutator eine Reaktionskraft, welche durch einen Pfeil F2 angedeutet ist.

Wie oben bereits angedeutet, ist dies insofern bedeutend, da bei einer Erwärmung des Materials der Haltevorrichtung 130 unter Umständen ein zuverlässiger elektrischer Kontakt zwischen Kohlebürstekontaktfläche 150 und Kommutator nicht mehr gewährleistet ist, da das Material der Haltevorrichtung 130, in der Regel aus einem Kunststoff, sozusagen "wegschwimmt" und einen definierten Abstand von Haltevorrichtung 130 bzw. Kohlebürste 140 zum Kommutator nicht mehr zulässt. Zur Vermeidung dieser Situation schlägt die vorliegende Erfindung deshalb eine Kombination der oben erwähnten Materialien vor, wobei jedoch auch andere Materialien mit geeigneten Eigenschaften, d.h. Schmelztemperaturen, denkbar sind.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Es sei noch bemerkt, dass die Erfindung nicht nur im Automobilbereich anwendbar ist, sondern in jedem Bereich, wo ein Einmaltemperaturschutz für ein elektrisches Gerät, wie z.B. ein Elektromotor, benötigt wird.

### Bezugszeichenliste

- 10: Lötdrossel
- 20: Längsachse der Lötdrossel
- 30: Drahtabschnitt der Lötdrossel
- 40: Drahtabschnitt der Lötdrossel
- 50: Drahtende der Lötdrossel
- 60: Drahtende der Lötdrossel
- 70: Lötstelle
- 80: weiteres Drahtende der Lötdrossel
- 90: weiteres Drahtende der Lötdrossel
- 100: Ferritkern der Lötdrossel
- 110: Abschnitt der Lötdrossel
- 120: Abschnitt der Lötdrossel
- 130: Haltevorrichtung
- 140: Stromzufuhreinrichtung/Kohlebürste
- 150: Kohlebürstekontaktfläche
- 160: Befestigungsabschnitt der Haltevorrichtung

## Patentansprüche

1. Schutzvorrichtung zur Verwendung in einem elektrischen Stromkreis einer elektrischen Maschine, insbesondere eines Elektromotors,
mit einer Haltevorrichtung (130), die dazu ausgebildet ist, Stromzufuhreinrichtungen (140) zum Zuführen des elektrischen Stroms aufzunehmen und zu halten, wobei die Haltevorrichtung aus einem ersten Material mit einer ersten Schmelztemperatur T1 ausgebildet ist,
mit einer Temperaturschutzvorrichtung (10), die dazu ausgebildet ist, den elektrischen Stromkreis vor einer Übertemperatur zu schützen, und die aus einem zweiten Material mit einer zweiten Schmelztemperatur T2 ausgebildet ist,
wobei das erste Material und das zweite Material derart gewählt sind und/oder die Temperaturschutzvorrichtung (10) derart angeordnet ist, dass der elektrische Stromkreis bei Erreichen zumindest einer der Schmelztemperaturen T1, T2 selbständig unterbrochen wird,
**dadurch gekennzeichnet,**
**dass** das Verhältnis der ersten Schmelztemperatur T1 zu der zweiten Schmelztemperatur T2 im Bereich von 1,2 bis 1,50 liegt.

2. Schutzvorrichtung nach Anspruch 1,
**dadurch gekennzeichnet,**
**dass** das zweite Material der Temperaturschutzvorrichtung (10) ein bleifreies Lotmaterial umfasst.

3. Schutzvorrichtung nach Anspruch 2,
**dadurch gekennzeichnet,**
**dass** das bleifreie Lotmaterial einen Silberanteil als Legierungsbestandteil aufweist.

4. Schutzvorrichtung nach einem der vorangehenden Ansprüche,
**dadurch gekennzeichnet,**
**dass** das zweite Material der Temperaturschutzvorrichtung (10) eines der folgenden Materialien oder eine Kombination davon umfasst: Sn96Ag4, SnCu0,7Ni, Sn95Ag4Cu1, Sn96Ag4, Sn95,5Ag3,5 und/oder Cu.

5. Schutzvorrichtung nach einem der vorangehenden Ansprüche,
**dadurch gekennzeichnet,**
**dass** das Material für die Haltevorrichtung (130) einen Kunststoff umfasst, insbesondere Polyphthalamid (PPA) und/oder Polyphenylensulfid (PPS).

6. Schutzvorrichtung nach einem der vorangehenden Ansprüche,
**dadurch gekennzeichnet,**
**dass** das Verhältnis der ersten Schmelztemperatur T1 zu der zweiten Schmelztemperatur T2 im Bereich von 1,23 und 1,40 liegt.

7. Schutzvorrichtung nach einem der vorangehenden Ansprüche,
**dadurch gekennzeichnet,**
**dass** die Temperaturschutzvorrichtung (10) mittels Befestigungselementen unmittelbar an der Haltevorrichtung (130) angebracht ist.

8. Elektrische Antriebsanordnung,
mit einer elektrischen Maschine,
mit einem elektrischen Stromkreis zur Versorgung der elektrischen Maschine,
mit einer Schutzvorrichtung nach einem der Ansprüche 1 bis 7, die in Reihe in einem Strompfad des elektrischen Stromkreises angeordnet ist.

9. Antriebsanordnung nach Anspruch 8,
**dadurch gekennzeichnet,**
**dass** die Haltevorrichtung (130) zur Aufnahme und zum Führen wenigstens zweier Kohlebürsten (140) ausgebildet, welche als Stromzufuhreinrichtungen (140) zum Zuführen des elektrischen Stroms zum Elektromotor ausgebildet sind.

10. Antriebsanordnung nach einem der Ansprüche 8 oder 9,
**dadurch gekennzeichnet,**
**dass** die elektrische Maschine als ein Elektromotor für ein Kraftfahrzeug ausgebildet ist, welcher mit seinem stromführenden Lastpfad in Reihe zu einem Strompfad des elektrischen Stromkreises und der Temperaturschutzvorrichtung (1) angeordnet ist.

11. Antriebsanordnung nach Anspruch 10,
**dadurch gekennzeichnet,**
**dass** der Elektromotor als Kühlerlüftermotor und/oder als Klimagebläsemotor ausgebildet ist.

## Claims

1. Protection device for use in an electrical current circuit of an electrical machine, in particular an electric motor,
having a holding device (130) that is embodied for the purpose of receiving and holding current supplying devices (140) for supplying the electrical current, wherein the holding device is embodied from a first material having a first melting temperature T1,
having a temperature protection device (10) that is embodied for the purpose of protecting the electrical current circuit, and that is embodied from a second material having a second melting temperature T2,
wherein the first material and the second material are selected in such a manner and/or the temperature protection device (10) is arranged in such a manner that the electrical current circuit is independently interrupted when achieving at least one of the melting temperatures T1, T2,
**characterized in that**
the ratio of the first melting temperature T1 to the second melting temperature T2 is in the range of 1.2 to 1.5.

2. The protection device as claimed in claim 1, **characterized in that**
the second material of the temperature protection device (10) comprises a lead-free soldering material.

3. The protection device as claimed in claim 2,
**characterized in that**
the lead-free soldering material comprises a silver portion as an alloy component.

4. The protection device as claimed in anyone of the preceding claims,
**characterized in that**
the second material of the temperature protection device (10) comprises one of the following materials or a combination thereof: Sn96Ag4, SnCu0.7Ni, Sn95Ag4Cul, Sn96Ag4, Sn95.5Ag3.5 and/or Cu.

5. The protection device as claimed in any one of the preceding claims,
**characterized in that**
the material for the holding device (130) comprises a synthetic material, in particular polyphthalamide (PPA) and/or polyphenylene sulfide (PPS).

6. The protection device as claimed in any one of the preceding claims,
**characterized in that**
the ratio of the first melting temperature T1 to the second melting temperature T2 is in the range of 1.23 and 1.40.

7. The protection device as claimed in any one of the preceding claims,
**characterized in that**
the temperature protection device (10) is directly attached to the holding device (130) by means of fastening elements.

8. An electrical drive arrangement,
having an electrical machine,
having an electrical current circuit for supplying the electrical machine,
having a protection device as claimed in any one of the claims 1 to 7, said protection device being arranged in series in a current path of the electrical current circuit.

9. The drive arrangement as claimed in claim 8,
**characterized in that**
the holding device (130) is embodied for receiving and guiding at least two carbon brushes (140) that are embodied as current supplying devices (140) for supplying the electrical current to the electric motor.

10. The drive arrangement as claimed in any one of the claims 8 or 9,
**characterized in that**
the electric machine is embodied as an electric motor for a motor vehicle that is arranged with its current guiding load path in series with respect to a current path of the electrical current circuit and the temperature protection device (1).

11. The drive arrangement as claimed in claim 10,
**characterized in that**
the electric motor is embodied as a cooling fan motor and/or as an air-conditioning fan motor.

## Revendications

1. Dispositif de protection destiné à être utilisé dans un circuit électrique d'une machine électrique, en particulier d'un moteur électrique, comportant :
un dispositif de support (130), qui est réalisé pour recevoir et maintenir des dispositifs d'alimentation en courant (140) destinés à alimenter le courant électrique, le dispositif de support étant réalisé d'un premier matériau avec une première température de fusion T1,
un dispositif de protection thermique (10), qui est réalisé pour protéger le circuit électrique contre une surtempérature, et qui est réalisé d'un second matériau avec une seconde température de fusion T2,
le premier matériau et le second matériau étant choisis de telle manière et/ou le dispositif de protection thermique (10) étant disposé de telle manière, que le circuit électrique est interrompu automatiquement lorsqu'il atteint au moins une des températures de fusion T1, T2,
**caractérisé en ce que**
le rapport de la première température de fusion T1 à la seconde température de fusion T2 se situe dans la plage de 1,2 à 1,50.

2. Dispositif de protection selon la revendication 1, **caractérisé en ce que**
le second matériau du dispositif de protection thermique (10) comprend un matériau de soudure sans plomb.

3. Dispositif de protection selon la revendication 2,
**caractérisé en ce que**
le matériau de soudure sans plomb contient de l'argent comme constituant d'alliage.

4. Dispositif de protection selon l'une des revendications précédentes,
**caractérisé en ce que**
le second matériau du dispositif de protection thermique (10) comprend l'un des matériaux suivants ou une combinaison de ceux-ci : Sn96Ag4, SnCu0,7Ni, Sn95Ag4Cu1, Sn96Ag4, Sn95,5Ag3,5 et/ou Cu.

5. Dispositif de protection selon l'une des revendications précédentes,
**caractérisé en ce que**
le matériau pour le dispositif de support (130) comprend une matière plastique, en particulier du polyphtalamide (PPA) et/ou du polysulfure de phénylène (PPS).

6. Dispositif de protection selon l'une des revendications précédentes,
**caractérisé en ce que**
le rapport de la première température de fusion T1 à la seconde température de fusion T2 se situe dans la plage de 1,23 à 1,40.

7. Dispositif de protection selon l'une des revendications précédentes,
**caractérisé en ce que**
le dispositif de protection thermique (10) est monté directement sur le dispositif de support (130) au moyen d'éléments de fixation.

8. Système d'entraînement électrique, comportant :
une machine électrique,
un circuit électrique destiné à alimenter la machine électrique,
un dispositif de protection selon l'une des revendications 1 à 7, qui est disposé en série dans une voie de courant du circuit électrique.

9. Système d'entraînement selon la revendication 8,
**caractérisé en ce que**
le dispositif de support (130) est réalisé pour recevoir et pour guider au moins deux balais de charbon (140), qui sont réalisés sous la forme de dispositifs d'alimentation en courant (140) destinés à alimenter le courant électrique dans le moteur électrique.

10. Système d'entraînement selon l'une des revendications 8 ou 9,
**caractérisé en ce que**
la machine électrique est réalisée sous la forme d'un moteur électrique pour un véhicule automobile, qui est disposé avec son chemin de charge conducteur en série avec une voie de courant du circuit électrique et le dispositif de protection thermique (1).

11. Système d'entraînement selon la revendication 10,
**caractérisé en ce que**
le moteur électrique est réalisé sous la forme d'un moteur de ventilateur de radiateur et/ou d'un moteur de ventilateur de climatisation.
